(19) Europäisches Patentamt
European Patent Office
Office européen des brevets

(11) EP 3 768 774 B1

(12) **EUROPEAN PATENT SPECIFICATION**

(45) Date of publication and mention of the grant of the patent:
**04.09.2024 Bulletin 2024/36**

(21) Application number: **19711139.6**

(22) Date of filing: **21.03.2019**

(51) International Patent Classification (IPC):
***C08L 23/04*** *(2006.01)*

(52) Cooperative Patent Classification (CPC):
(C-Sets available)
**C08L 23/04;** C08F 4/65912; C08F 4/65916 (Cont.)

(86) International application number:
**PCT/EP2019/057139**

(87) International publication number:
**WO 2019/180166 (26.09.2019 Gazette 2019/39)**

# (54) USE OF A BI- OR MULTIMODAL POLYETHYLENE COMPOSITION

VERWENDUNG EINER BI- ODER MULTIMODALEN POLYETHYLENZUSAMMENSETZUNG

UTILISATION D'UNE COMPOSITION DE POLYÉTHYLÈNE BI- OU MULTIMODALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2018 EP 18163001**

(43) Date of publication of application:
**27.01.2021 Bulletin 2021/04**

(73) Proprietor: **Borealis AG**
**1020 Vienna (AT)**

(72) Inventors:
- **GALGALI, Girish Suresh**
**4021 Linz (AT)**
- **QUDAIH, Rana**
**Abu Dhabi (AE)**
- **MANDARD, Barbara**
**3583 Beringen (BE)**
- **JAMIESON, John**
**06100 Porvoo (FI)**

(74) Representative: **Maiwald GmbH**
**Elisenhof**
**Elisenstraße 3**
**80335 München (DE)**

(56) References cited:
**WO-A1-2016/135590 US-A1- 2010 159 173**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 768 774 B1



(Cont. next page)

(52) Cooperative Patent Classification (CPC): (Cont.)

C-Sets
**C08F 210/16, C08F 2/001;**
**C08F 210/16, C08F 4/65925;**
**C08L 23/04, C08K 5/098, C08L 23/04;**
C08F 210/16, C08F 210/14, C08F 210/08,
C08F 2500/12

**Description**

Summary of the invention

The present invention is directed to the use of a polymer composition comprising a bi- or multimodal ethylene polymer (P) and a nucleating agent being a dicarboxylic acid of a cyclic alkane for providing a film maintaining an oxygen induction time within 10 % of the oxygen induction time of the identical polymer composition without the dicarboxylic acid of a cyclic alkane.

Background of the invention

WO 2016/135590 relates to a polyethylene cap/closure for a bottle that contains a carbonated beverage.

US 2010/159173 describes polymer articles and processes of forming the same. The processes generally include providing a bimodal ethylene based polymer, blending the bimodal ethylene based polymer with a nucleator to form modified polyethylene and forming the modified polyethylene into a polymer article, wherein the polymer article is selected from pipe articles and blown films.

Films made from polyethylene are generally known in the art and inter alia used in packaging applications. Especially in the latter applications good optical, mechanical and barrier properties are required. Furthermore, as packaging applications frequently require heat sealing, such films should simultaneously have good sealing properties, e.g. thermal stability etc.

Thus, a specific property profile is required meeting all the afore-mentioned requirements.

Description of the invention

It has now been found that such a property profile can be obtained by the combination of a specific bi- or multimodal polyethylene and a specific nucleating agent.

Therefore, the present invention relates to the use of a polymer composition comprising

a) a bi- or multimodal ethylene polymer (P) having a molecular weight distribution (MWD) of below 5.0 and a heterogeneity factor (HF) determined by Cross fraction chromatography (CFC) in the range of 30 to 120, preferably in the range of 35 to 100, more preferably in the range of 45 to 95, and a density in the range of 910 to 935 kg/m$^3$;

b) a compound according to the following formula (I)

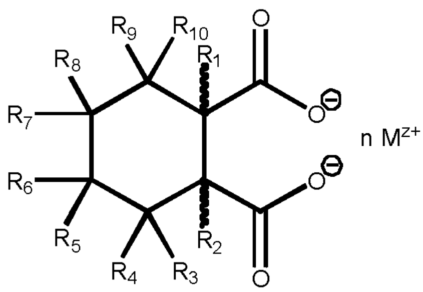

(I)

wherein

each of $R_1$, $R_2$, $R_3$, $R_4$, $R_5$, $R_6$, $R_7$, $R_8$, $R_9$ and $R_{10}$ is independently selected from hydrogen, $C_1$ to $C_{10}$ hydrocarbyl groups, hydroxyl, $C_1$ to $C_{10}$ alkoxy, $C_1$ to $C_{10}$ alkyleneoxy, amine, $C_1$ to $C_{10}$ alkylamine, F, Cl, Br, I and phenyl; whereby two of $R_3$ to $R_{10}$ located on adjacent carbon atoms may be fused to form a cyclic structure;

M is selected from the groups consisting of calcium, strontium, lithium, zinc, magnesium and monobasic aluminium;

n is 1 or 2;

z is 1 or 2;

the sum of n+z is 3; and

c) optionally a fatty acid salt

for providing a film maintaining an oxygen induction time within 10 % of the

oxygen induction time of the identical polymer composition without the compound according to formula (I) and the optional fatty acid salt.

It has surprisingly been found that the composition of the invention has improved stiffness and optical properties while tear strength and dart impact properties were not affected or not affected in a relevant manner compared with the non-nucleated polymer. Moreover, the heat stability is maintained.

**Bi- or multimodal ethylene polymer (P)**

The polymer (P) used in the present invention is bimodal or multimodal, i.e. its molecular weight profile does not comprise a single peak but instead comprises the combination of two or more peaks centered about different average molecular weights as a result of the fact that the polymer comprises two or more separately produced components. Such bi- or multimodal polymers may be prepared for example by two or more stage polymerization or by the use of two or more different polymerization catalysts in a one stage polymerization. Preferably, however, they are produced by a two- or more stage polymerization process using the same catalyst, in particular a slurry polymerization in a loop reactor followed by gas phase polymerization in one or more gas phase reactor(s). Preferably the polymer (P) is produced using a two-stage polymerization process, wherein a slurry polymerization in a loop reactor followed by a gas phase polymerization in a gas phase reactor.

Such a bimodal ethylene polymer (P) consists of a low molecular weight (LMW) fraction and a high molecular weight (HMW) fraction, the HMW fraction has a higher weight average molecular weight $M_w$ than the LMW fraction.

As outlined above, preferably the bimodal ethylene polymer (P) is produced using a two-stage polymerization process with a slurry polymerization in a loop reactor followed by a gas phase polymerization in a gas phase reactor. Preferably the LMW fraction is produced in the loop reactor and the HMW fraction in the subsequent gas phase reactor in the presence of the LMW fraction using the same catalyst.

It is preferred to continuously or intermittently introduce the procatalyst, cocatalyst, ethylene, hydrogen, optionally comonomer and diluent (typically an inert aliphatic hydrocarbon, preferably isobutane or propane) into the loop reactor, withdraw the slurry continuously or intermittently from the loop reactor, pass it into a separation stage to remove at least part of the hydrocarbons, and direct the first polymer component into the gas phase reactor, together with additional ethylene, comonomer and optionally hydrogen and an eventual inert gas to produce the second copolymer component. The resulting copolymer composition is then withdrawn from the gas phase reactor, either continuously or intermittently.

It should be understood that the multi-step process described above may include additional precontacting or prepolymerization stages, where the catalyst is pretreated or prepolymerized before it is introduced into the first polymerization stage. A process including a prepolymerization stage has been described in WO-A-96/18662. The temperature in the prepolymerization step is typically from 0 to 90 °C, preferably from 20 to 70 °C and more preferably from 30 to 60 °C. The pressure is not critical and is typically from 1 to 150 bar, preferably from 10 to 100 bar.

Preferably, the bi- or multimodal ethylene polymer (P) is a bi- or multimodal linear low density polyethylene, more preferably a bimodal linear low density polyethylene.

The total amount of comonomers present in the bi- or multimodal ethylene polymer (P), such as the bi- or multimodal linear low density polyethylene, or the bimodal linear low density polyethylene, is preferably 0.5 to 10.0 mol%, more preferably 1.0 to 8.0 mol%, even more preferably 1.0 to 5.0 mol% and most preferably 1.5 to 5.0 mol%.

The comonomer(s) of the bi- or multimodal ethylene polymer (P), such as the bi- or multimodal linear low density polyethylene, or the bimodal linear low density polyethylene, is/are preferably selected from $C_4$ to $C_{20}$ alpha olefins, more preferably from $C_4$ to $C_{10}$ alpha olefins, e.g. 1-butene and/or 1-hexene.

More preferably, the bi- or multimodal ethylene polymer (P), such as the bi- or multimodal linear low density polyethylene, or the bimodal linear low density polyethylene, comprises at least two different comonomers selected from $C_4$ to $C_{20}$ alpha olefins, more preferably from $C_4$ to $C_{10}$ alpha olefins, e.g. 1-butene and 1-hexene. Usually not more than three different comonomers are present in the bi- or multimodal ethylene polymer (P), such as the bi- or multimodal linear low density polyethylene, or the bimodal linear low density polyethylene.

The bi- or multimodal ethylene polymer (P), such as the bi- or multimodal linear low density polyethylene, or the bimodal linear low density polyethylene, preferably has an $MFR_2$, determined according to ISO 1133 at a temperature of 190°C and under a load of 2.16 kg, of from 0.25 to 20 g/10 min, more preferably 0.5 to 10 g/10 min.

The ratio of the $MFR_{21}$, determined according to ISO 1133 at a temperature of 190°C and under a load of 21.6 kg, to the $MFR_2$, determined according to ISO 1133 at a temperature of 190°C and under a load of 2.16 kg, $MFR_{21}/MFR_2$, of the bi- or multimodal ethylene polymer (P), such as the bi- or multimodal linear low density polyethylene, or the bimodal linear low density polyethylene is preferably 13 to 35, more preferably 13 to 30, even more preferably 10 to 25 and most preferably 15 to 25.

The bi- or multimodal ethylene polymer (P), such as the bi- or multimodal linear low density polyethylene, or

the bimodal linear low density polyethylene preferably has a molecular weight distribution (MWD) of below 5.0, more preferably 4.9 or below, and most preferably of 4.4 or below.

The density of the bi- or multimodal ethylene polymer (P), such as the bi- or multimodal linear low density polyethylene, or the bimodal linear low density polyethylene, is 910 to 935 kg/m$^3$, preferably 915 to 930 kg/m$^3$.

The bi- or multimodal ethylene polymer (P), such as the bi- or multimodal linear low density polyethylene, or the bimodal linear low density polyethylene, preferably has a shear thinning index $SHI_{2.7/210}$ of 1.5 to 7.0, preferably 2.0 to 3.5.

The bi- or multimodal ethylene polymer (P) usually comprises at least

- an ethylene polymer component (A) and
- an ethylene polymer component (B)

whereby the $MFR_2$ of the ethylene polymer component (A) is different from the $MFR_2$ of the ethylene polymer component (B), the $MFR_2$ of both (A) and (B) being determined according to ISO 1133 at a temperature of 190°C and under a load of 2.16 kg.

In case of the bi- or multimodal ethylene polymer (P), such as the bi- or multimodal linear low density polyethylene, or the bimodal linear low density polyethylene, used according to the present invention a difference in $MFR_2$ denotes a difference in the molecular weight as well.

The ethylene polymer component (A) and the ethylene polymer component (B), when both are mentioned, are also be referred as "ethylene polymer component (A) and (B)".

Preferably, the ethylene polymer component (A) has a $MFR_2$, determined according to ISO 1133 at a temperature of 190°C and under a load of 2.16 kg, of 1 to 50 g/10 min, preferably of 1 to 40, more preferably of 1 to 30, more preferably of 2 to 20, more preferably of 2 to 15, even more preferably of 2 to 10, g/10 min. More preferably, the ethylene polymer component (A) has higher $MFR_2$ than ethylene polymer component (B).

Even more preferably, the ratio of the $MFR_2$ of ethylene polymer component (A) to the $MFR_2$ of the final the bi- or multimodal ethylene polymer (P), such as the bi- or multimodal linear low density polyethylene, or the bimodal linear low density polyethylene is of 2 to 50, preferably of 5 to 40, preferably of 10 to 30, 10 more preferably of 10 to 25, more preferably of 15 to 25.

If the $MFR_2$ of ethylene polymer components, e.g. ethylene polymer component (B), cannot be measured because it cannot be isolated from the mixture of the ethylene polymer components (A) and (B), then it can be calculated using so called Hagström equation (Hagström, The Polymer Processing Society, Europe/Africa Region Meeting, Gothenburg, Sweden, August 19-21, 1997). In the formula "MI" is used to denote the $MFR_2$.

$$MI_b = \left( w \cdot MI_1^{-\frac{w^{-b}}{a}} + (1-w) \cdot MI_2^{-\frac{w^{-b}}{a}} \right)^{-a \cdot w^b}$$

According to Hagström, in said equation, a=5.2 and b=0.7 for $MFR_2$. Furthermore, w is the weight fraction of the other ethylene polymer component, e.g. component (A), having higher MFR. The ethylene polymer component (A) can thus be taken as the component 1 and the ethylene polymer component (B) as the component 2. $MI_b$ is the $MFR_2$ of the final bi- or multimodal ethylene polymer (P), such as the bi- or multimodal linear low density polyethylene, or the bimodal linear low density polyethylene.

The $MFR_2$ of the ethylene polymer component (B) ($MI_2$) can then be solved from the equation when the $MFR_2$ of the ethylene polymer component (A) ($MI_1$) and the final bi- or multimodal ethylene polymer (P), such as the bi- or multimodal linear low density polyethylene, or the bimodal linear low density polyethylene ($MI_b$) are known.

Even more preferably the bi- or multimodal ethylene polymer (P), such as the bi- or multimodal linear low density polyethylene, or the bimodal linear low density polyethylene, is further multimodal with respect to difference in density between the ethylene polymer component (A) and ethylene polymer component (B). Preferably, the density of ethylene polymer component (A) is different, preferably higher, than the density of the ethylene polymer component (B). Preferably the density of the ethylene polymer component (A) is of 925 to 950 kg/m$^3$, preferably of 930 to 945 kg/m$^3$.

Naturally, in addition to multimodality with respect to, i.e. difference between, the MFR of the ethylene polymer components (A) and (B), the bi- or multimodal ethylene polymer (P), such as the bi- or multimodal linear low density polyethylene, or the bimodal linear low density polyethylene, can also be multimodal e.g. with respect to one or both of the two further properties:
multimodality with respect to, i.e. difference between,

- the comonomer type or the comonomer content(s) present in the ethylene polymer components (A) and (B), or both the type and content(s) of comonomers present in the ethylene polymer components (A) and (B); and/or
- the density of the ethylene polymer components (A) and (B).

Preferably, the bi- or multimodal ethylene polymer (P), such as the bi- or multimodal linear low density polyethylene, or the bimodal linear low density polyethylene, is further multimodal with respect to comonomer type and/or comonomer content (mol%), preferably wherein the $C_4$ to $C_{20}$ alpha-olefin comonomer of ethylene polymer component (A) is different from the $C_4$ to $C_{20}$ alpha-olefin comonomer of ethylene polymer component (B), preferably wherein the $C_4$ to $C_{20}$ alpha-olefin comonomer of ethylene polymer component (A) is 1-butene and the $C_4$ to $C_{20}$ alpha-olefin comonomer of ethylene polymer component (B) is 1-hexene.

Preferably, the ratio of [the amount (mol%) of $C_4$ to $C_{20}$ alpha-olefin comonomer present in ethylene polymer component (A)] to [the amount (mol%) of at least two $C_4$ to $C_{20}$ alpha-olefin comonomers of the final the bi- or multimodal ethylene polymer (P), such as the bi- or multimodal linear low density polyethylene, or the bimodal linear low density polyethylene] is of 0.2 to 0.6, preferably of 0.24 to 0.5, more preferably the ethylene polymer component (A) has lower amount (mol%) of comonomer than the ethylene polymer component (B).

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (wt.%) in component B = (comonomer content (wt.%) in final product - (weight fraction of component A * comonomer content (wt.%) in component A))/(weight fraction of component B).

Preferably, the amount (mol%) of the $C_4$ to $C_{20}$ alpha-olefin comonomer(s) present in the ethylene polymer component (A) is of 0.03 to 5.0 mol%, preferably of 0.05 to 4.0 mol%, more preferably of 0.1 to 3.0 mol%, even more preferably of 0.1 to 2.0 mol%, more preferably of 0.15 to 1.5 mol%, even more preferably of 0.15 to 1.0 mol%.

Even more preferably the bi- or multimodal ethylene polymer (P), such as the bi- or multimodal linear low density polyethylene, or the bimodal linear low density polyethylene, is further multimodal with respect to difference in density between the ethylene polymer component (A) and ethylene polymer component (B). Preferably, the density of ethylene polymer component (A) is different, preferably higher, than the density of the ethylene polymer component (B). More preferably the density of the ethylene polymer component (A) is of 925 to 950 kg/m$^3$, preferably of 930 to 945 kg/m$^3$.

More preferably the bi- or multimodal ethylene polymer (P), such as the bi- or multimodal linear low density polyethylene, or the bimodal linear low density polyethylene, is multimodal at least with respect to, i.e. has a difference between, the $MFR_2$, the comonomer type and the comonomer content (mol%), as well as with respect to, i.e. has a difference between, the density of the ethylene polymer component (A) and ethylene polymer component (B), as defined above, below or claims including any of the preferable ranges or embodiments of the polymer composition.

Most preferably the bi- or multimodal ethylene polymer (P), such as the bi- or multimodal linear low density polyethylene, or the bimodal linear low density polyethylene, comprises, preferably consists of, an ethylene polymer component (A) and an ethylene polymer component (B), wherein

- the ethylene polymer component (A) has higher $MFR_2$ than ethylene polymer component (B);

  - more preferably, the ethylene polymer component (A) has $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, even more preferably of 2 to 10, g/10 min;
  - even more preferably, the ratio of the $MFR_2$ of ethylene polymer component (A) to the $MFR_2$ of the final bi- or multimodal linear low density polyethylene, or the bimodal linear low density polyethylene, is of 2 to 50, preferably of 5 to 40, preferably of 10 to 30, more preferably of 10 to 25, more preferably of 15 to 25;

and wherein
- the ethylene polymer component (A) has different comonomer than the ethylene polymer (B);

  - more preferably, the ethylene polymer component (A) has lower amount (mol%) of comonomer than the ethylene polymer component (B), even more preferably, the ratio of [the amount (mol%) of $C_4$ to $C_{20}$ alpha-olefin comonomer(s) present in ethylene polymer component (A)] to [the amount (mol%) of at least two $C_4$ to $C_{20}$ alpha-olefin comonomers of the final bi- or multimodal linear low density polyethylene, or the bimodal linear low density polyethylene] is of 0.2 to 0.6, preferably of 0.25 to 0.5;

- even more preferably, wherein the $C_4$ to $C_{20}$ alpha-olefin comonomer of ethylene polymer component (A) is 1-butene and the $C_4$ to $C_{20}$ alpha-olefin comonomer of ethylene polymer component (B) is 1-hexene;

and wherein

- the ethylene polymer component (A) has different, preferably higher, density than the density of the ethylene polymer component (B);
    - more preferably density of the final bi- or multimodal linear low density polyethylene, or the bimodal linear low density polyethylene is 915 to 930 kg/$m^3$;
    - even more preferably the density of the ethylene polymer component (A) is of 925 to 950 kg/$m^3$, preferably of 930 to 945 kg/$m^3$.

Preferably, the bi- or multimodal ethylene polymer (P), such as the bi- or multimodal linear low density polyethylene, or the bimodal linear low density polyethylene, comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 50 to 65 wt.%, more preferably 50 to 60 wt.%, based on the total amount (100 wt.%) of the bi- or multimodal ethylene polymer (P). Most preferably, the bi- or multimodal ethylene polymer (P), such as the bi- or multimodal linear low density polyethylene, or the bimodal linear low density polyethylene, consists of the ethylene polymer components (A) and (B) as the sole polymer components. Accordingly, the split (weight/weight) between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

It is noted herein, that the bi- or multimodal ethylene polymer (P), such as the bi- or multimodal linear low density polyethylene, or the bimodal linear low density polyethylene, may optionally comprise a prepolymer component in an amount up to 20 wt.% which has a well-known meaning in the art. In such case the prepolymer component is calculated in one of the ethylene polymer components (A) or (B), preferably in an amount of the ethylene polymer component (A), based on the total amount of the polymer of the bi- or multimodal ethylene polymer (P), such as the bi- or multimodal linear low density polyethylene, or the bimodal linear low density polyethylene.

Accordingly, the bi- or multimodal ethylene polymer (P), such as the bi- or multimodal linear low density polyethylene, or the bimodal linear low density polyethylene, is preferably produced using a coordination catalyst. More preferably, the ethylene polymer components (A) and (B) of the bi- or multimodal ethylene polymer (P), such as the bi- or multimodal linear low density polyethylene, or the bimodal linear low density polyethylene, are preferably produced using a single site catalyst, which includes metallocene catalyst and non- metallocene catalyst, which all terms have a well-known meaning in the art. The term "single site catalyst" means herein the catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (C) has the following formula (II):

$$(L)_m R_n M X_q \qquad (II)$$

wherein

"M" is a transition metal (M) transition metal (M) of Group 3 to 10 of the Periodic Table (IUPAC 2007),
each "X" is independently a monoanionic ligand, such as a σ-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 1,
"q" is 1, 2 or 3, preferably 2 and

m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf), "X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Most preferred single site catalyst is a metallocene catalyst which means the catalytically active metallocene complex, as defined above, together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

More preferably the ethylene polymer components (A) and (B) of the bi- or multimodal ethylene polymer (P), such as the bi- or multimodal linear low density polyethylene, or the bimodal linear low density polyethylene, are produced in the presence of the same metallocene catalyst.

The bi- or multimodal ethylene polymer (P), such as the bi- or multimodal linear low density polyethylene, or the bimodal linear low density polyethylene, may be produced in any suitable polymerization process known in the art. Into the polymerization zone is also introduced ethylene, optionally an inert diluent, and optionally hydrogen and/or comonomer. The ethylene polymer component (A) is preferably produced in a first polymerization zone and the ethylene polymer component (B) is produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations. Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art. For example, it is possible to suspend the catalyst in a diluent and maintain it as homogeneous slurry, to mix the catalyst with a viscous mixture of grease and oil and feed the resultant paste into the polymerization zone or to let the catalyst settle and introduce portions of thus obtained catalyst mud into the polymerization zone.

The polymerization, preferably of the ethylene polymer component (A), in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mole, preferably from about 2 to about 20 % by mole and in particular from about 3 to about 12 % by mole.

The temperature in the slurry polymerization is typically from 50 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization.

Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A- 479186 and US-A-5391654.

It is sometimes advantageous to conduct the slurry polymerization above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

The slurry may be withdrawn from the reactor either continuously or intermittently. A preferred way of intermittent

withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A-1310295 and EP-A-1591460.

Hydrogen may be fed into the reactor to control the molecular weight of the polymer as known in the art. Furthermore, one or more alpha-olefin comonomers are added into the reactor e.g. to control the density of the polymer product. The actual amount of such hydrogen and comonomer feeds depends on the catalyst that is used and the desired melt index (or molecular weight) and density (or comonomer content) of the resulting polymer.

The polymerization, preferably of the ethylene polymer component (B), in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with at least one comonomer in the presence of a polymerization catalyst and, preferably in the presence of the reaction mixture from the first polymerization zone comprising the ethylene polymer component (A) in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, among other, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic tranu, as otherwise the whole bed would be entrained with the fluidization gas.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporized.

The vaporization heat then contributes to the removal of the reaction heat. This kind of operation is called condensed mode and variations of it are disclosed, among others, in WO-A-2007/025640, US-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A- 00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100 °C, preferably from 65 to 90 °C. The pressure is suitably from 10 to 40 bar, preferably from 15 to 30 bar.

The polymerization of at least ethylene polymer component (A) and ethylene polymer component (B) in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the

properties of the final polymer.

The prepolymerization step may be conducted in slurry or in gas phase. Preferably, prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 40 to 70 °C.

The pressure is not critical and is typically from 1 to 150 bar, preferably from 10 to 100 bar.

The catalyst components are preferably all introduced to the prepolymerization step. Preferably the reaction product of the prepolymerization step is then introduced to the first polymerization zone. Also preferably, as mentioned above, the prepolymer component is calculated to the amount of the ethylene polymer component (A).

It is within the knowledge of a skilled person to adapt the polymerization conditions in each step as well as feed streams and resident times to obtain the bi- or multimodal ethylene polymer (P), such as the bi- or multimodal linear low density polyethylene, or the bimodal linear low density polyethylene.

The bi- or multimodal ethylene polymer (P), such as the bi- or multimodal linear low density polyethylene, or the bimodal linear low density polyethylene, comprises at least, and preferably solely, the ethylene polymer components (A) and (B) obtained from the second polymerization zone, which is preferably a gas phase reactor as described above, is the subjected to conventional post reactor treatment to remove the unreacted components among others.

Thereafter, typically, the obtained polymer is extruded and pelletized. The extrusion may be conducted in the manner generally known in the art, preferably in a twin screw extruder. One example of suitable twin screw extruders is a co-rotating twin screw extruder. Those are manufactured, among others, by Coperion or Japan Steel Works. Another example is a counter rotating twin screw extruder. Such extruders are manufactured, among others, by Kobe Steel and Japan Steel Works. Before the extrusion at least part of the desired additives, as mentioned above, are preferably mixed with the polymer. The extruders typically include a melting section where the polymer is melted and a mixing section where the polymer melt is homogenized. Melting and homogenization are achieved by introducing energy into the polymer. Suitable level of specific energy input (SEI) is from about 150 to about 450 kWh/ton polymer, preferably from 175 to 350 kWh/ton.

**Compound according to formula (I)**

In the present invention the term "hydrocarbyl" denotes a monovalent residue consisting of carbon and hydrogen atoms only.

In compound (I) each of $R_1$, $R_2$, $R_3$, $R_4$, $R_5$, $R_6$, $R_7$, $R_8$, $R_9$ and $R_{10}$ is preferably independently selected from hydrogen, $C_1$ to $C_{10}$ hydrocarbyl groups, hydroxyl, $C_1$ to $C_{10}$ alkoxy, $C_1$ to $C_{10}$ alkyleneoxy, amine, $C_1$ to $C_{10}$ alkylamine, F, Cl, Br, I and phenyl, preferably from hydrogen and a $C_1$ to $C_{10}$ hydrocarbyl group, more preferably from hydrogen and a $C_1$ to $C_{10}$ alkyl group, even more preferably from hydrogen and a $C_1$ to $C_4$ alkyl group, still more preferably from hydrogen and a $C_1$ or $C_2$ alkyl group.

Preferably, the total number of carbon atoms present in $R_1$ to $R_{10}$ is 50 or below, more preferably 35 or below and most preferably 20 or below.

In a preferred embodiment, each of $R_1$, $R_2$, $R_3$, $R_4$, $R_5$, $R_6$, $R_7$, $R_8$, $R_9$ and $R_{10}$ is hydrogen or a methyl group, and in a particularly preferred embodiment each of $R_1$, $R_2$, $R_3$, $R_4$, $R_5$, $R_6$, $R_7$, $R_8$, $R_9$ and $R_{10}$ is hydrogen.

In case in the compound according to formula (I) two of $R_3$ to $R_{10}$ located on adjacent carbon atoms may be fused to form a cyclic structure, preferably a cyclic hydrocarbyl structure, the cyclic hydrocarbyl structure is preferably a five to eight-membered ring, more preferably a five or six-membered ring. The cyclic hydrocarbyl structure, if present, may be an aliphatic cyclic hydrocarbyl structure or an aromatic cyclic hydrocarbyl structure, and is preferably an aliphatic cyclic hydrocarbyl structure. Usually, the cyclic hydrocarbyl structure, if present, comprises 5 to 12 carbon atoms.

However, preferably, the compound according to formula (I) does not comprise such cyclic structures.

As to n and z, both of them may be is 1 or 2, and the sum of n+z is 3. Preferably, n is 1 and z is 2.

As outlined above, M is selected from the groups consisting of calcium, strontium, lithium, zinc, magnesium and monobasic aluminium, preferably M is selected from calcium, and magnesium. In a preferred embodiment M is calcium.

Preferably the amount of compounds according to formula (I) is within the range of 50 to 10000 ppm, more preferably 150 to 7500 ppm, more preferably within the range of 200 to 5000 ppm, even more preferably within the range of 250 to 2000 ppm, based on the total amount of the polymer composition.

The compound according to formula (I) acts as a nucleating agent in the polymer composition used according to the present invention. Nucleating agents provide nucleation sites for crystal growth during cooling of a thermoplastic molten formulation. The presence of such nucleation sites results in a larger number of crystals, which, in turn are smaller. As a result of the smaller crystals formed therein, usually clarification of the target thermoplastic may be achieved. Therefore, nucleating agents are sometimes also referred to as clarifiers. However, clarification may also be achieved

without nucleation, i.e. not all clarifiers are necessarily nucleating agents.

The polymer composition used according to the invention may further comprise a fatty acid salt, usually the fatty acid salt of a metal, e.g. an alkaline metal, an alkaline earth metal and/or zinc.

Fatty acids are known to the person skilled in the art. Fatty acids having 6 to 21 carbon atoms are preferred whereby fatty acids having 12 to 21 carbon atoms are particularly preferred.

Non-limiting examples for suitable fatty acid salts are stearates of metals, e.g. alkaline metals, alkaline earth metals and/or zinc, particularly zinc stearate or calcium stearate.

The total amount of fatty acid salts, if present, is preferably within the range of 25 to 5000 ppm, more preferably within the range of 75 to 3750 ppm, even more preferably within the range of 100 to 2500 ppm and even more preferably within the range of 125 to 1000 ppm, based on the total amount of the polymer composition.

In case fatty acids are present, preferably the weight ratio of the compound according to formula (I) to the total amount of fatty acid(s) is within the range of 0.5:1 to 5:1, preferably within the range of 1:1 to 3:1.

Further nucleating agents and/or clarifiers besides the compounds according to formula (I) and the fatty acid salts, if present, may be used in the polymer composition. In case they are used, their amount is usually below 300 ppm based on the total amount of the polymer composition.

In one embodiment the only nucleating agents and clarifiers present in the polymer composition used according to the present invention are the compounds according to formula (I), and the fatty acid salts, if present.

Preferably, the total amount of nucleating agents and clarifiers in the composition used according to the present invention including the compounds of formula (I) and, the optional fatty acid salt(s) is 75 to 15000 ppm, more preferably 225 to 11250 ppm, more preferably within the range of 300 to 7500 ppm, even more preferably within the range of 375 to 3000 ppm based on the total amount of the polymer composition.

**Polymer composition**

The amount of the bi- or multimodal ethylene polymer (P), such as the bi- or multimodal linear low density polyethylene, or the bimodal linear low density polyethylene is preferably at least 85 wt.%, more preferably at least 90 wt.%, even more preferably at least 95 wt.%, such as at least 98 wt.%, based on the total weight of the polymer composition.

The amount of the compound according to formula (I) is given above.

The polymer composition may contain further polymer components and optionally additives and/or fillers. It is noted herein that additives may be present in the bi- or multimodal ethylene polymer (P), such as the bi- or multimodal linear low density polyethylene, or the bimodal linear low density polyethylene, and/or mixed with the bi- or multimodal ethylene polymer (P) e.g. in a compounding step for producing the polymer composition. The optional additives and fillers and the used amounts thereof are conventional in the field of film applications. Examples of such additives are, among others, antioxidants, process stabilizers, UV- stabilizers, pigments, fillers, antistatic additives, antiblock agents, nucleating agents, acid scavengers as well as polymer processing agent (PPA).

It is understood herein that any of the additives and/or fillers can optionally be added in so called master batch which comprises the respective additive(s) together with a carrier polymer. In such case the carrier polymer is not calculated to the polymer components of the polymer composition, but to the amount of the respective additive(s), based on the total amount of polymer composition (100 wt.%).

The properties of the polymer composition are mainly defined by the bi - or multimodal ethylene polymer (P), such as the bi- or multimodal linear low density polyethylene, or the bimodal linear low density polyethylene.

Hence, the polymer composition, preferably has an $MFR_2$, determined according to ISO 1133 at a temperature of 190°C and under a load of 2.16 kg, of from 0.25 to 20 g/10 min, more preferably 0.5 to 10 g /10 min.

The ratio of the $MFR_{21}$, determined according to ISO 1133 at a temperature of 190°C and under a load of 21.6 kg, to the $MFR_2$, determined according to ISO 1133 at a temperature of 190°C and under a load of 2.16 kg, $MFR_{21}/MFR_2$, of the polymer composition is preferably 13 to 35, more preferably 13 to 30, even more preferably 10 to 25 and most preferably 15 to 25.

The polymer composition preferably has a molecular weight distribution (MWD) of below 5.0, more preferably 4.9 or below, and most preferably of 4.4 or below.

Preferably, the density of the polymer composition is in the range of 910 to 935 kg/m$^3$, more preferably in the range of 915 to 930 kg/m$^3$.

The polymer composition preferably has a shear thinning index $SHI_{2.7/210}$ in the range of 1.5 to 7.0, more preferably in the range of 2.0 to 3.5.

With regard to the properties of the bi- or multimodal ethylene polymer (P) and the compound according to the formula (I) reference is made to the definitions provided above.

The polymer composition when formed into a monolayer film having a thickness of 40 μm is further characterized by at least one of the following features

i) a tensile modulus in machine direction, determined according to ASTM D 882 of 180 to 300 MPa, preferably 200 to 300 MPa;
ii) a tear strength in machine direction determined according to ISO 6383-2 of at least 4.5 N, preferably at least 5.0 N;
iii) a dart drop impact strength determined according to ISO7765-1:2004, method A of at least 900 g, preferably at least 950 g;
iv) a haze, determined according to ASTM D1003, of 15 % or less;
v) a gloss at 60°C, determined according to ISO 2813 of at least 75 %, preferably at least 95 %;
vi) an oxygen transmission rate, determined according to ASTM D 3985 using a pressure sensor method (standard conditions 23°C, 50% humidity) of 4000 ml/($m^2$·day) or less, preferably 3800 ml/($m^2$·day) or less;
vii) a water vapour transmission rate, determined according to ASTM F 1249, of 10.0 g/($m^2$·day) or less, preferably 9.0 g/($m^2$·day) or less;
viii) a sealing initiation temperature (SIT) at 5N, determined according to ASTM F 2029 and ASTM F 88 with a seal with of 25 mm, a seal pressure of 43.5 psi and a dwell time of 1 s, using film samples with thickness of 40 μm, of 75°C or more, preferably 85°C or more; and/or
ix) a hot tack temperature at 1N, determined according to ASTM F 1921 (inside-inside) at a sealing pressure of 0.25 N/$mm^2$, a dwell/sealing time of 1 s, a delay time of 100 ms and a test/peel speed of 198.8 mm/s, using film samples with thickness of 40 μm, of 65°C or more, preferably 75°C or more.

The preparation of the film is described in the experimental part.

**Article**

The present specification further describes an article comprising, preferably consisting of, the polymer composition used according to the present invention.

Preferably the article of is a film comprising one or more layer(s), wherein at least one of the layers comprises, preferably consists, of a polymer composition used according to the present invention, more preferably, the film is a monolayer film.

The total thickness of the film comprising one or more layer(s), preferably the monolayer film is preferably within the range of 10 to 250 μm, more preferably within the range of 20 to 150 μm and most preferably within the range of 250 to 100 μm.

The film may be prepared by methods usual in the art, e.g. casting or blow-extrusion, the latter being preferred.

The preferred blow-extrusion process is described in the following.

Films are produced by extrusion through an annular die with a pressure difference applied to blow the extruded cylinder into a film and achieve the desired orientation within the film, i.e. to build a stress into the cooled film.

The components of the film, e.g. the bi - or multimodal ethylene polymer (P), the compound according to formula (I) and the fatty acid salt, if present, are typically intimately mixed prior to extrusion and blowing of the film, as is well known in the art. It is especially preferred to thoroughly blend the components, for example using a twin screw extruder, preferably a counter-rotating extruder prior to extrusion and film blowing.

Typically, the compositions constituting the layers of the film will be blown i.e. (co)extruded at a temperature in the range 160°C to 240°C, and cooled by blowing gas (generally air) at a temperature of 10 to 50°C to provide a frost line height of 1 to 8 times the diameter of the die, preferably 2 to 6 times the diameter of the die. The blowing up ratio should generally be in the range 1.2 to 6, preferably 1.5 to 4.

Suitable film-forming processes are for example described in EP-A-299750.

The film-forming process steps are known and may be carried out in one film line in a manner known in the art. Such film lines are commercially available.

The film, preferably the blown film has preferably not been subjected to a subsequent stretching step.

The present specification further describes the use of a compound according to the following formula (I)

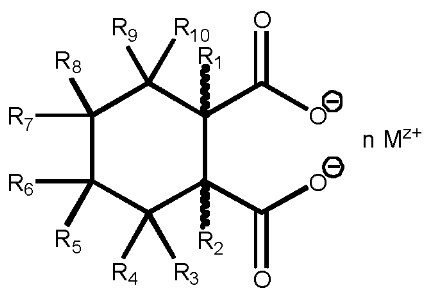

(I)

wherein

each of $R_1$, $R_2$, $R_3$, $R_4$, $R_5$, $R_6$, $R_7$, $R_8$, $R_9$ and $R_{10}$ is independently selected from hydrogen, $C_1$ to $C_{10}$ hydrocarbyl groups, hydroxyl, $C_1$ to $C_{10}$ alkoxy, $C_1$ to $C_{10}$ alkyleneoxy, amine, $C_1$ to $C_{10}$ alkylamine, F, Cl, Br, I and phenyl;
whereby two of $R_3$ to $R_{10}$ located on adjacent carbon atoms may be fused to form a cyclic hydrocarbyl structure;
M is selected from the groups consisting of calcium, strontium, lithium, zinc, magnesium and monobasic aluminium;
n is 1 or 2;
z is 1 or 2;
the sum of n+z is 3
optionally in combination with a fatty acid salt, for at least one of the following

i) decreasing the haze by at least 25 %;
ii) increasing the gloss at 60°C by at least 50 %;
iii) increasing the tensile modulus in machine direction by at least 15 %;
iv) decreasing the water vapour transmission rate (WVTR) by at least 10 %; and/or
v) decreasing the oxygen transmission rate (OTR) by at least 25 %

of a layer of a film, the layer comprises a bi- or multimodal ethylene polymer (P) having a molecular weight distribution (MWD) of below 5.0 and a heterogeneity factor (HF) determined by Cross fraction chromatography (CFC) in the range of 30 to 120, preferably in the range of 35 to 100, more preferably in the range of 45 to 95, whereby the film optionally comprises one or more additional layer(s),
compared with the identical film without the compound according to formula (I) and the optional fatty acid salt.

The present invention is directed to the use of a polymer composition as described above for providing a film maintaining an oxygen induction time within 10 % of the oxygen induction time of the identical polymer composition without the compound according to formula (I) and the optional fatty acid salt.

It is preferred that said film has

i) a haze determined according to ASTM D1003, of 15 % or less, and/or
ii) a gloss at 60°C, determined according to ISO 2813 of at least 75 %, and/or
iii) a tensile modulus in machine direction, determined according to ASTM D 882 of 180 to 300 MPa, and/or
iv) a water vapour transmission rate (WVTR) determined according to ASTM F 1249, of 10.0 g/($m^2$·day) or less, and/or
v) an oxygen transmission rate (OTR) determined according to ASTM D 3985 using a pressure sensor method (standard conditions 23°C, 50% humidity), of 4000 ml/($m^2$·day) or less.

Preferably in the use according to the present invention the amount of the bi- or multimodal ethylene polymer (P) based on the film is at least 80 wt.%.

The present specification further describes the use of a polymer composition comprising

a) a bi- or multimodal ethylene polymer;
b) a compound according to the following formula (I)

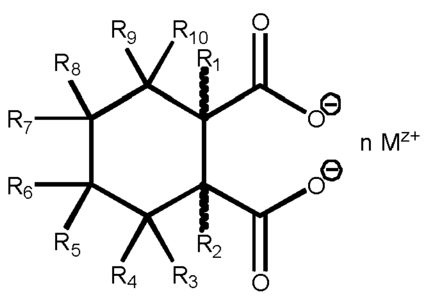

(I)

wherein

each of $R_1$, $R_2$, $R_3$, $R_4$, $R_5$, $R_6$, $R_7$, $R_8$, $R_9$ and $R_{10}$ is independently selected from hydrogen, $C_1$ to $C_{10}$ hydrocarbyl groups, hydroxyl, $C_1$ to $C_{10}$ alkoxy, $C_1$ to $C_{10}$ alkyleneoxy, amine, $C_1$ to $C_{10}$ alkylamine, F, Cl, Br, I and phenyl;
whereby two of $R_3$ to $R_{10}$ may be fused to form a cyclic structure;

M is selected from the groups consisting of calcium, strontium, lithium, zinc, magnesium and monobasic aluminium;
n is 1 or 2;
z is 1 or 2;
the sum of n+z is 3
for providing a formed article having a haze value determined according to ASTM D1003 of 15.0 % or less.

Preferably, said formed article is a film or a molded article, more preferably a blow molded article or rotomolded article.
It is especially preferred that said formed article is a pipe, mono-or multilayered film, cap, closure, artificial grass or geomembrane.
Preferred features of the polymer composition and the article described above are also preferred features of the use according to the present invention.

**Experimental part**

Measurement methods

Density

Density of the materials is measured according to ISO 1183-1:2012 (method A) in Isododecane (immersion liquid) at 23 °C. Samples are prepared by compression moulding (CM) of plates at 180 °C, the average cooling rate of CM plates is appoximately 15 °C/min. Test specimens are prepared by die cutting of 4 pieces with a diameter of 40 mm.
The test specimens are conditioned for at least 16 h at 23 °C and 50 % relative humidity before testing. Determination of density starts 24 (± 2) hours after compression moulding.

**Melt Flow Rate (MFR) or Melt Index (MI)**

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

**Molecular weight averages, molecular weight distribution (Mn, Mw, Mz, MWD)**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.
A high temperature GPC instrument, equipped with an IR5 infrared detector from PolymerChar (Valencia, Spain), equipped with 3 x Agilent-PLgel Olexis and 1x Agilent-PLgel Olexis Guard columns (Church Stretton, UK) was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200

μL of sample solution was injected per analysis. Data collection was performed using PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g, \qquad \alpha_{PS} = 0.655$$

$$K_{PE} = 39 \times 10^{-3}\ mL/g, \qquad \alpha_{PE} = 0.725$$

$$K_{PP} = 19 \times 10^{-3}\ mL/g, \qquad \alpha_{PP} = 0.725$$

A third order polynomial fit was used to fit the calibration data. Integration in the low molecular weight part was done either from the first rise of the polymer peak or if this is before the first calibration point from the first calibration point.

All samples were prepared in the concentration range of 0.5 -1 mg/ml and dissolved at 160 °C for 3 hours for PE under continuous gentle shaking.

**Determination of IV**

The reduced viscosity (also known as viscosity number), $\eta_{red}$, and intrinsic viscosity, [η], of polyethylenes (PE) are determined according to ISO 1628-3: "Determination of the viscosity of polymers in dilute solution using capillary viscometers".

Relative viscosities of a diluted polymer solution with concentration of 1 mg/ml and of the pure solvent (decahydronaphthalene stabilized with 200 ppm 2,6-bis(1,1-dimethylethyl)-4-methylphenol) are determined in an automated capillary viscometer (Lauda PVS1) equipped with 4 Ubbelohde capillaries placed in a thermostatic bath filled with silicone oil. The bath temperature is maintained at 135 °C. The sample is dissolved with constant stirring until complete dissolution is achieved (typically within 90 min).

The efflux time of the polymer solution as well as of the pure solvent are measured several times until three consecutive readings do not differ for more than 0.2s (standard deviation).

The relative viscosity of the polymer solution is determined as the ratio of averaged efflux times in seconds obtained for both, polymer solution and solvent:

$$\eta_{rel} = \frac{t_{solution} - t_{solvent}}{t_{solvent}}$$

[dimensionless]

Reduced viscosity ($\eta_{red}$) is calculated using the equation:

$$\eta_{red} = \frac{t_{solution} - t_{solvent}}{t_{solvent} * C} \qquad [dl/g]$$

where C is the polymer solution concentration at 135°C: $C = \frac{m}{V\gamma}$, and *m* is the polymer mass, V is the solvent volume, and γ is the ratio of solvent densities at 20°C and 135°C ($\gamma = \rho_{20}/\rho_{135} = 1.107$).

The calculation of intrinsic viscosity [η] is performed by using the Schulz-Blaschke equation from the single concentration measurement:

$$[\eta]=\frac{\eta_{red}}{1+K+C+\eta_{red}}$$

where K is a coefficient depending on the polymer structure and concentration. For calculation of the approximate value for [η], K=0.27.

The corresponded Mv values for the PE are calculated by using the following Mark Houwink equation:

$$Mv = 5{,}37 \text{ x } 10^4 [\eta]^{1{,}37}$$

**Comonomer Content (%wt and %mol)** was determined quantitative nuclear-magnetic resonance (NMR) spectroscopy.

**Quantitative $^{13}C\{^1H\}$ NMR** spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382, Parkinson, M., Klimke, K., Spiess, H.W., Wilhelm, M., Macromol. Chem. Phys. 2007;208:2128, Castignolles, P., Graf, R., Parkinson, M., Wilhelm, M., Gaborieau, M., Polymer 50 (2009) 2373). Standard single-pulse excitation was employed utilising the NOE at short recycle delays of 3 s (Pollard, M., Klimke, K., Graf, R., Spiess, H.W., Wilhelm, M., Sperber, O., Piel, C., Kaminsky, W., Macromolecules 2004;37:813, Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201) and the comonomer fraction calculated as the fraction of 1-butene in the polymer with respect to all monomer in the polymer.

The amount of isolated 1-butene incorporated in EEBEE sequences was quantified using the integral of the *B2 sites at 39.9 ppm accounting for the number of reporting sites per comonomer:

$$B = I_{*B2}$$

With no other signals indicative of other comonomer sequences, i.e. consecutive comonomer incorporation, observed the total 1-butene comonomer content was calculated based solely on the amount of isolated 1-butene sequences:

$$Btotal = B$$

The total mole fraction of 1-butene in the polymer was then calculated as:

$$fB = Btotal / ( Etotal + Btotal + Htotal )$$

Characteristic signals corresponding to the incorporation of 1-hexene were observed (J. Randall, Macromol. Sci., Rev. Macromol. Chem. Phys. 1989, C29, 201) and the comonomer fraction calculated as the fraction of 1-hexene in the polymer with respect to all monomer in the polymer.

The amount isolated 1-hexene incorporated in EEHEE sequences was quantified using the integral of the *B4 sites at 38.3 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non-consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

Due to the overlap of the signals from the *B4 and *βB4B4 sites from isolated (EEHEE) and non-consecutively (EEHEHEE) incorporated 1-hexene respectively the total amount of isolated 1-hexene incorporation is corrected based on the amount of non-consecutive 1-hexene present:

$$H = I_{*B4} - 2 * I\beta\beta B4B4$$

The total 1-hexene content was calculated based on the sum of isolated, consecutive and non-consecutively incorporated 1-hexene:

$$Htotal = H + HH + HEH$$

The total mole fraction of 1-hexene in the polymer was then calculated as:

$$fH = Htotal / ( Etotal + Btotal + Htotal )$$

The amount of ethylene was quantified using the integral of the bulk methylene (δ+) sites at 30.00 ppm. This integral included the γ site as well as the 3B4 sites from 1-hexene. The total ethylene content was calculated based on the bulk integral and compensating for the observed 1-butene and 1-hexene sequences and end-groups:

$$E = I_{\delta+} / 2$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The presence of isolated comonomer units is corrected for based on the number of comonomer units and saturated end-groups present:

$$Etotal = E + (3/2)*B + (2/2)*H + (1/4)*HH + (3/4)*HEH + (3/2)*S$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

B[wt%] = 100*(fB*56.11)/((fB*56.11)+(fH*84.16)+((1-(fB+fH))* 28.05))

H[wt%] = 100*(fH*84.16)/((fB*56.11)+(fH*84.16)+((1-(fB-fH))* 28.05))

**TREF method**

The chemical composition distribution was determined by analytical Temperature Rising Elution fractionation as described by Soares, J.B.P., Fractionation, In: Encyclopedia Of Polymer Science and Technology, John Wiley & Sons, New York, pp. 75-131, Vol. 10, 2001**.** The separation of the polymer in TREF is according to their crystallinity in solution. The TREF profiles were generated using a CRYSTAF-TREF 200+ instrument manufactured by PolymerChar S.A. (Valencia, Spain).

The polymer sample was dissolved in 1,2,4-trichlorobenzene (TCB, stabilized with 250 mg/L 2,6-Di tert butyl-4-methyl-phenol) at a concentration between 1,5 and 2,0 mg/ml at 150 °C for 180 min and 1.8 mL of the sample solution was injected into the column (8 mm inner diameter, 15 cm length, filled with inert e.g. glass beads). The column oven was then rapidly cooled to 110 °C and held at 110 °C for 30 min for stabilization purpose and it was later slowly cooled to 35°C under a constant cooling rate (0.1 °C/min). The polymer was subsequently eluted from the column with 1,2,4-trichlorobenzene (stabilized with 250 mg/L 2,6-Di tert butyl-4-methyl-phenol) at a flow rate of 0,5 mL/min at 35 °C for a period of 10 min followed by a temperature increase from 35 °C to 135 °C at a constant heating rate of 0.5 °C/min with a flow rate of 0,5ml/min. The concentration of the polymer during elution was recorded by an infrared detector (measuring the C-H absorption at 3.5 micrometer wavelength). The detector response was plotted as a function of the temperature. The normalized concentration plot was presented as fractogram together with the cumulative concentration signal normalized to 100.

**Definition of High crystalline fraction (HCF) and Low crystalline fraction (LCF):**

The high crystalline fraction (HCF) is the amount in wt.% of the polymer fraction with will elute between 90°C and 110°C elution temperature, which mainly contains the homo-polyethylene chains or chains with a very low branching content.

The low crystalline fraction (LCF) is than the amount in wt.% of the polymer fraction with elutes between 35 and 90°C

**Rheological properties:**

**Dynamic Shear Measurements (frequency sweep measurements)**

The characterization of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, η*, the dynamic shear viscosity, η', the out-of-phase component of the complex shear viscosity η" and the loss tangent, tan δ which can be expressed as follows:

$$G' = \frac{\sigma_0}{\gamma_0}\cos\delta \text{ [Pa]} \qquad (3)$$

$$G'' = \frac{\sigma_0}{\gamma_0}\sin\delta \text{ [Pa]} \qquad (4)$$

$$G^* = G' + iG'' \text{ [Pa]} \qquad (5)$$

$$\eta^* = \eta' - i\eta'' \text{ [Pa.s]} \qquad (6)$$

$$\eta' = \frac{G''}{\omega} \text{ [Pa.s]} \qquad (7)$$

$$\eta'' = \frac{G'}{\omega} \text{ [Pa.s]} \qquad (8)$$

Besides the above mentioned rheological functions one can also determine other rheological parameters such as the so-called elasticity index *EI(x)*. The elasticity index *EI(x)* is the value of the storage modulus, G' determined for a value of the loss modulus, G" of x kPa and can be described by equation (9).

$$EI(x) = G' \; for \; (G'' = x \; kPa) \text{ [Pa]} \qquad (9)$$

For example, the EI(5kPa) is the defined by the value of the storage modulus G', determined for a value of G" equal to 5 kPa.

Shear Thinning Index ($SHI_{2.7/210}$) is defined as a ratio of two viscosities measured at frequencies 2.7 rad/s and 210 rad/s, $\mu_{2.7}/\mu_{210}$.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995.).
[3] Definition of terms relating to the non-ultimate mechanical properties of polymers, Pure & Appl. Chem., Vol. 70, No. 3, pp. 701-754, 1998.

**Cross Fractionation Chromatography (a-TREF x SEC)**

**Method LLDPE**

The chemical composition distribution as well as the determination of the molecular weight distribution and the corresponded molecular weight averages (Mn, Mw and Mv) at a certain elution temperature (polymer crystallinity in solution) were determined by a fully automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the cross-fractionation chromatography (TREF x SEC). A four-band IR5 infrared detector (PolymerChar, Valencia, Spain) was used to monitor the concentration. Around 40 mg of the polymer sample was dissolved in 25 ml TCB in the stainless steel vessel for 150 min at 150 °C. Once the sample was completely dissolved an aliquot of 0,5 ml was loaded into the TREF column and stabilized for a while at 110 °C. The polymer was crystallized and precipitated to a temperature of 30°C by applying a constant cooling rate of 0.1 °C/min. A discontinuous elution process was performed using the following temperature steps: (30, 40, 45, 50, 53, 56, 59, 62, 64, 66, 69, 72, 76, 79, 82, 85, 89, 91, 93, 95, 97, 100, 110, and 120°C)

In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert butyl-4-methylphenol) at 150 °C and a constant flow rate of 1 mL/min were applied. The column set was calibrated using universal calibration (according to ISO 16014-2:2003) with at least 15 narrow MWD polystyrene (PS) standards in the range of 0,5 kg/mol to 11 500 kg/mol. Following Mark Houwink constants were used to convert PS molecular weights into the PE molecular weight equivalents (ASTM D6474).

$$K_{PS} = 19 \text{ x } 10^{-3} \text{ mL/g}, \qquad \alpha_{PS} = 0.655$$

$$K_{PE} = 39 \text{ x } 10^{-3} \text{ mL/g}, \alpha_{PE} = 0.725$$

A third order polynomial fit was used to fit the calibration data. Data processing was performed using the software provided from PolymerChar with the CFC instrument.

**Heterogeneity factor (HF) Method**

Heterogeneity factor (HF) describes both, variation in the comonomer content or density and in the molecular weight between high crystalline (HC) and low crystalline (LC) fraction. The HC fraction is defined as the polymer fraction eluting above 85°C, where the LC fraction is the fraction eluting between 40 and 85°C in CFC. From the elution temperatures and their corresponded molecular weight fractions obtained by CFC analysis, the HF is calculated in the following way:

$$HF = \left(T_{P(HC)} - T_{P(LC)}\right) * \left(\log\left(M_{w(at\ T_P(LC))}\right) - \log\left(M_{w(at\ T_P(HC))}\right) * 10\right)$$

The peaks maxima are obtained from the TREF curve extracted from the CFC results. $T_{P(HC)}$ is the peak maximum of the HC fraction where $T_{P(LC)}$ is the peak maximum from the LC fraction. If there is no peak maximum for the low crystalline fraction, the assigned Tp is 85°C. The Mw (at Tp) is the weight average molecular weight of the polymer fraction eluting at Tp or if the Tp is between two CFC fractions, the Mw is calculated by a linear regression. The HF is negative if the Mw for the low crystalline fraction is smaller than the high crystalline fraction. Generally, a high HF indicates high variation in comonomer content and molecular weight combined with well-separated low and high crystalline peaks in the TREF profile.

**Angle $\alpha$**

The angle $\alpha$ is the angle between the adjacent leg B and the hypotenuse in a right-angled triangle. The length of the adjacent leg B can be described by the difference of the peak maxima of the high and low crystalline peak *($T_{P(HC)}$ - $T_{P(LC)}$)* where the length of opposite leg A (log ($M_{w(atTp(LC)}$) - log($M_{w(atTp(HC)}$) * 10) is the difference between the Mw values at the corresponded peak maxima.

Figure 1 shows the relation between the angle $\alpha$ and the heterogeneity factor (HF).

**Tensile modulus of the film**

Determined according to ASTM D 882.

**Tear strength in machine direction**

Determined according to ISO 6383-2.

**Dart Drop impact strength**

Determined according to ISO 7765-1: 2004.

**Haze**

Determined according to ASTM D1003.

**Gloss**

Determined according to ISO 2813.

**Yellowness Index**

Determined according to ASTM E 313.

**Oxygen transmission rate**

Determined according to ASTM D 3985 using a pressure sensor method (standard conditions 23°C, 50% humidity).

**Water vapour transmission rate**

Determined according to ASTM F 1249.

**Oxygen induction time (OIT)**

The oxidation induction time (OIT) at 200 °C was determined with a TA Instrument Q20 according to ISO 11357-6. Calibration of the instrument was performed with Indium and Tin, according to ISO 11357-1. The maximum error in temperature from calibration was less than 0.1 K. Each polymer sample (cylindrical geometry with a diameter of 5 mm and thickness of 0.6±0.1 mm) was placed in an open aluminium crucible, heated from 25 °C to 200 °C at a rate of 20 °C min-1 in nitrogen (>99.95 vol.% $N_2$, < 5 ppm $O_2$) with a gas flow rate of 50 mL $min^{-1}$, and allowed to rest for 5 min before the atmosphere was switched to pure oxygen (>99.95 vol.% $O_2$), also at a flow rate of 50 mL $min^{-1}$. The samples were maintained at constant temperature, and the exothermal heat associated with oxidation was recorded. The oxidation induction time was the time interval between the initiation of oxygen flow and the onset of the oxidative reaction. Each presented data point was the average of three independent measurements.

**Seal initiation temperature (SIT)**

The seal initiation temperature (at 5 N) was determined in accordance with ASTM F 2029 and ASTM F 88 with a seal with of 25 mm, a seal pressure of 43.5 psi and a dwell time of 1 s. The SIT was determined when the seal force reached 5 N.

**Hot tack temperature**

The hot tack temperature (at 1 N) was determined in accordance with ASTM F 1921 (inside-inside) at a sealing pressure of 0.25 $N/mm^2$, a dwell/sealing time of 1 s, a delay time of 100 ms and a test/peel speed of 198.8 mm/s.

## Examples

Preparation of ethylene copolymer

Catalyst Preparation

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

Polymerization

A multimodal polymer was prepared in a multistage reactor system containing a loop reactor and a gas phase reactor. A prepolymerization step preceded the actual polymerization step. The prepolymerization stage was carried out in slurry in a 50 $dm^3$ loop reactor at about 60 °C in a pressure of about 65 bar using the polymerization catalyst prepared above. Ethylene was fed in a ratio of (220 g of $C_2$)/(1g/catalyst). Propane was used as the diluent, 1-butene was fed in amounts of (25 g of $C_4$)/(1 kg of $C_2$) and hydrogen was fed in amount to adjust the $MFR_2$ of the prepolymer to about 6 g/10 min.

The obtained slurry together with prepolymerized catalyst were introduced into a 500 $dm^3$ loop reactor operated at 85°C and 64 bar pressure, wherein also continuous feeds of propane, ethylene hydrogen and 1-butene were introduced such that ethylene content in the reaction mixture was 4.0 mol%. The molar ratio of $H_2/C_2$ in the reactor was 0.15 mol/kmol and the mole ratio of 1-butene to ethylene was 110 mol/kmol when the process conditions were adjusted to form a polymer having an $MFR_2$ of 6 g/10 min and a density of about 938 kg/$m^3$.

The polymer was withdrawn from the loop reactor and introduced into a flash tank operated at 3 bar pressure and 60 °C temperature.

From the flash tank the polymer was introduced into a fluidized bed gas phase reactor, where also additional ethylene, 1-hexene comonomer and hydrogen were added, together with nitrogen as an inert gas to produce the HMW component in the presence of the LMW component such that ethylene content in the reactor gas was 37 mol%. The gas phase reactor was operated at a temperature of 75 °C and a pressure of 20 bar and the ratio of $H_2/C_2$, was 0.4 mol/kmol and $C_6/C_2$ 39 mol/kmol in the reactor when the process conditions were adjusted to form a final polymer which, after collecting the polymer, blending with additives and extruding into pellets in a counter-rotating twin-screw extruder JSW CIM90P, resulted in a polymer having an $MFR_2$ of 1.5 g/10 min and density of 917 kg/$m^3$. The split between the polymer produced in the loop reactor and the polymer produced in the gas phase reactor was 42/58. The polymer produced in the prepolymerization amounted to about 1.0 to 1.8 % of the total polymer and was calculated to the amount of the Loop product.

Following the above procedure, three multimodal polymers (A), (B) and (C) were produced using the same polymerization conditions. The polymers had an average $M_n$ of 23700 g/mol, an average $M_w$ of 94000 g/mol, an average $M_z$ of 183500 g/mol, an average molecular weight distribution, MWD ($M_w/M_n$) of 4.0. The average $C_4$-content was 0.40 mol% and the average $C_6$-content was 2.83 mol%. The average $SHI_{2.7/210}$ was 2.87.

The heterogeneity factor (HF) determined by Cross fraction chromatography (CFC) and the molecular weight determined by GPC as described above are summarized in Tables 1 and 2.

**Table 1:** CFC results

| | (Tp(HC)-Tp(LC) | $\log M_{W(at\ Tp(LC))} - \log M_{w\ (at\ TP(HC)}$* 10 | Angle $\alpha$ (Mw) | Heterogeneity factor (HF) |
|---|---|---|---|---|
| Polymer (A) | 31.5 | 2.55 | 4.6 | 80.5 |
| Polymer (B) | 31.5 | 2.36 | 4.3 | 74.3 |
| Polymer (C) | 31.5 | 2.52 | 4.6 | 79.3 |
| Average | 31.5 | 2.47 | 4.5 | 78.0 |

**Table 2:** GPC results:

| | Mw | Mn | PD | Mz | Mv |
|---|---|---|---|---|---|
| Polymer (A) | 94900 | 23800 | 4.0 | 185500 | 82450 |
| Polymer (B) | 93500 | 23900 | 3.9 | 181500 | 81300 |
| Polymer (C) | 93500 | 23400 | 4.0 | 183500 | 81250 |
| Average | 93966 | 23700 | 3.9 | 183500 | 81666 |

Inventive example 1 (IE1)

The ethylene copolymer (polymers (A), (B) and (C) compounded together) was mixed with HPN-20E, a mixture of 66 wt.% Calcium (1R, 2S)-cyclohexanedicarboxylate and 34 wt.% Zinc stearate, obtainable from Milliken, to obtain a final amount of HPN-20E of 500 ppm based on the resulting composition and films were produced on a coextrusion film blowing line (obtained from DR. COLLIN GMBH). The parameters were as follows:

- blow-up ratio (BUR): 3;
- die diameter: 60 mm;
- die gap: 1.2 mm;
- frost line height: 4 times the die diameter;

Comparative example 1 (CE1)

The procedure of inventive example 2 was repeated except that HPN-20E was not used. Hence, the corresponding mixing step was neither carried out.

The optical, mechanical and barrier properties of the compositions according to inventive example IE1 and comparative example CE1 are summarized in Table 3.

**Table 3:** Properties of the comparative and inventive compositions

| | IE1 | CE1 |
|---|---|---|
| MD Tensile modulus (1% Secant) (MPa) | 212.00 | 162.00 |
| MD Tear Strength (N) | 5.37 | 5.44 |
| Dart Drop Impact (DDI) (g) | 1008.10 | 1218.10 |
| Percent Haze (%) | 10.60 | 29.50 |
| Gloss at 20° | 53.73 | 6.02 |
| Gloss at 60° | 105.40 | 47.68 |
| Gloss at 85° | 99.74 | 85.72 |
| Yellow Index (YI) | 3.29 | 3.33 |
| Oxygen Transmission Rate (ml/($m^2$.day)) | 3614.00 | 6382.00 |
| Water Vapour Transmission Rate (g/($m^2$.day)) | 8.06 | 11.46 |
| SIT (at 5N) (°C) | 87.59 | 87.81 |
| Hot tack Temperature (at 1N) (°C) | 78.46 | 83.65 |

The results in the above table shows that the tensile modulus, i.e. the stiffness, is significantly increased (by 30%) using 500 ppm HPN-20E. Furthermore, the tear strength is not affected. The dart drop impact was reduced by 17% but this is not significant.

Moreover, the haze is reduced significantly by 64% and gloss values are increased significantly using HPN-20E. The Gloss at 60° was even increased by 121%.

The usage of HPN-20E did not lead to yellowing of the polymer.

In addition, the barrier properties are improved significantly. The oxygen transmission rate (OTR) is reduced

by almost 43% and the water vapour transmission (WVR) is reduced by almost 30%.

The SIT using HPN-20E film is almost the same of the pure polymer while the hot tack is improved (by almost 6.6%.).

Thus, the above results show that the inventive composition provides film having better mechanical strength, optical properties, barrier properties and hot tack without having high negative impact on the sealing performance and toughness performance.

Inventive example 2 (IE2)

The ethylene copolymer (polymers (A), (B) and (C) compounded together) was melt-blended with HPN-20E, a mixture of 66 wt.% Calcium (1R, 2S)-cyclohexanedicarboxylate and 34 wt.% Zinc stearate, obtainable from Milliken, to obtain a final amount of HPN-20E of 1500 ppm based on the resulting composition and extruded using a ZSK-57 melt extruder, the melt processing conditions are summarized in Table 4.

**Table 4:** Melt processing conditions

| | temperature [°C] | |
|---|---|---|
| Zone | Set | Actual |
| Zone 1 (Geh.1+2) | 200 | 200 |
| Zone 2 (Geh.3+4) | 200 | 201 |
| Zone 3 (Geh.5+6) | 200 | 196 |
| Zone 4 (Geh.7+8) | 190 | 192 |
| Zone 5 (Geh.9+10) | 190 | 188 |
| Zone 6 (Geh.11) | 190 | 185 |
| Adapter | | - |
| SWZ-1 | | - |
| SWZ-2 | | - |
| Zone 8 (Geh.13) | 175 | 175 |
| Melt Temperature 1 (°C) | | - |
| Melt Temperature 2 (°C) | | 179 |
| Throughput (kg/h) | | 90 |
| Screw Speed (rounds/min) | | 200 |
| Torque (%) | | 75 |
| Material pressure 1 (bar) | | - |
| Material pressure 2 (bar) | | 55 |
| specific energy (kwh/kg) | | 0.18 |
| Screw | PE-501 | |

Comparative example 3 (CE3)

The procedure of inventive example IE2 was repeated except that no HPN-20E was added, i.e. the neat polymer was subjected to the same compounding process as used in inventive example IE2.

Comparative example 4 (CE4)

Exceed 1018HA, a unimodal ethylene-hexene copolymer obtainable from ExxonMobil, was melt-blended with HPN-20E in the same manner as inventive example IE2 to obtain a final amount of HPN-20E of 1500 ppm based on the resulting composition.

Comparative example 5 (CE5)

The procedure of comparative example 4 was repeated except that no HPN-20E was added, i.e. the neat polymer was subjected to the same compounding process as used in comparative example CE4.

The oxygen induction times (OIT) of examples IE2, CE3, CE4 and CE5 were measured and compared, the results are as follows.

$$OIT(IE2)/OIT(CE3) = 96.8\%$$

$$OIT(CE4)/OIT(CE5) = 31.0\%$$

As the compositions not containing HPN-20E and the corresponding compositions containing HPN-20E have been subjected to the same compounding conditions, the above results show that the OIT of the bimodal polymer essentially stays the same upon adding HPN-20E whereas in case of a unimodal polyethylene the OIT significantly decreases.

## Claims

**1.** Use of a polymer composition comprising

a) a bi- or multimodal ethylene polymer (P) having a molecular weight distribution (MWD) of below 5.0 and a heterogeneity factor (HF) determined by Cross fraction chromatography (CFC) in the range of 30 to 120 and a density in the range of 910 to 935 kg/m$^3$;
b) a compound according to the following formula (I)

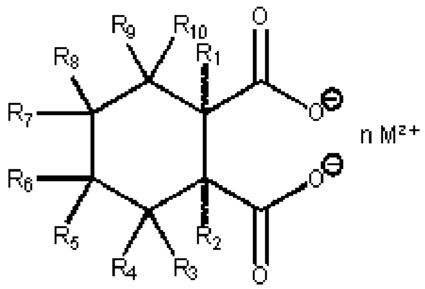

(I)

wherein

each $R_1$, $R_2$, $R_3$, $R_4$, $R_5$, $R_6$, $R_7$, $R_8$, $R_9$ and $R_{10}$ is independently selected from hydrogen, $C_1$, to $C_{10}$ hydrocarbyl groups, hydroxyl, $C_1$ to $C_{10}$ alkoxy, $C_1$ to $C_{10}$ alkyleneoxy, amine, $C_1$ to $C_{10}$ alkylamine, F, Cl, Br, I and phenyl;
whereby two of $R_3$ to $R_{10}$ located on adjacent carbon atoms may be fused to form a cyclic structure;
M is selected from the groups consisting of calcium, strontium, lithium, zinc, magnesium and monobasic aluminium;
n is 1 or 2;
z is 1 or 2;
the sum of n+z is 3; and

c) optionally a fatty acid salt

for providing a film maintaining an oxygen induction time within 10 % of the oxygen induction time of the identical polymer composition without the compound according to formula (I) and the optional fatty acid salt.

**2.** The use according to claim 1, wherein the bi- or multimodal ethylene polymer (P) has been produced using a single-site catalyst.

**3.** The use according to claims 1 or 2, wherein the amount of compounds according to formula (I) is within the range of 50 to 10000 ppm based on the total amount of the polymer composition.

**4.** The use according to any one of claims 1 to 3, wherein in formula (I) each of $R_1$, $R_2$, $R_3$, $R_4$, $R_5$, $R_6$, $R_7$, $R_8$, $R_9$ and $R_{10}$ is independently selected from hydrogen and a $C_1$ to $C_{10}$ hydrocarbyl group.

**5.** The use according to any one of the preceding claims, wherein the bi- or multimodal ethylene polymer (P) has an $MFR_2$, determined according to ISO 1133 at 190°C and under a load of 2.16 kg, of 0.25 to 20 g/10 min.

**6.** The use according to any one of the preceding claims, wherein the bi- or multimodal ethylene polymer (P) comprises at least an ethylene polymer component (A) and an ethylene polymer component (B), wherein the $MFR_2$ of the ethylene polymer component (A) is different from the $MFR_2$ of the ethylene polymer component (B), the $MFR_2$ of both (A) and (B) being determined according to ISO 1133 at a temperature of 190'C and under a load of 2.16 kg.

**7.** The use according to claim 6, wherein the ratio of [the amount (mol%) of comonomer present in ethylene polymer component (A)] to [the total amount (mol%) of comonomers of the final bi- or multimodal ethylene polymer (P)] is of 0.2 to 0.6, preferably of 0.24 to 0.5, more preferably the ethylene polymer component (A) has lower amount (mol%) of comonomer than the ethylene polymer component (B).

**8.** The use according to claims 6 or 7, wherein the ethylene polymer component (A) has an $MFR_2$, determined according to ISO 1133 at 190°C and under a load of 2.16 kg, of 1 to 50 g/10 min, preferably of 1 to 40, more preferably of 1 to 30, g/10 min.

**9.** The use according to any one of the preceding claims, wherein the polymer composition when formed into a monolayer film having a thickness of 40 μm is further **characterized by** at least one of the following features

i) a tensile modulus in machine direction, determined according to ASTM D 882 of 180 to 300 MPa;
ii) a tear strength in machine direction determined according to ISO 6383-2 of at least 4.5 N;
iii) a dart drop impact strength determined according to ISO 7765-1: 2004 of at least 900 g;
iv) a haze, determined according to ASTM D1003, of 15 % or less;
v) a gloss at 60°C, determined according to ISO 2813 of at least 75 %;
vi) an oxygen transmission rate, determined according to ASTM D 3985 using a pressure sensor method (standard conditions 23°C, 50% humidity), of 4000 ml/($m^2$·day) or less;
vii) a water vapour transmission rate, determined according to ASTM F 1249, of 10.0 g/(m2·day) or less;
viii) a sealing initiation temperature (SIT) at 5N, determined according to ASTM F 2029 and ASTM F 88 with a seal with of 25 mm, a seal pressure of 43.5 psi and a dwell time of 1 s, using film samples with thickness of 40 μm, of 75°C or more; and/or
ix) a hot tack temperature at 1N, determined according to ASTM F 1921 (inside-inside) at a sealing pressure of 0.25 N/mm2, a dwell/sealing time of 1 s, a delay time of 100 ms and a test/peel speed of 198.8 mm/s, using film samples with thickness of 40 μm, of 65°C or more.

**10.** The use according to any one of the preceding claims, whereby the amount of the bi- or multimodal ethylene polymer (P) based on the film is at least 80 wt.%.

## Patentansprüche

**1.** Verwendung einer Polymerzusammensetzung, umfassend

a) ein bi- oder multimodales Ethylenpolymer (P) mit einer Molekulargewichtsverteilung (MWD) von unter 5,0 und einem Heterogenitätsfaktor (HF), bestimmt durch Kreuzfraktionschromatographie (CFC), im Bereich von 30 bis 120 und einer Dichte im Bereich von 910 bis 935 kg/$m^3$;
b) eine Verbindung gemäß der folgenden Formel (1)

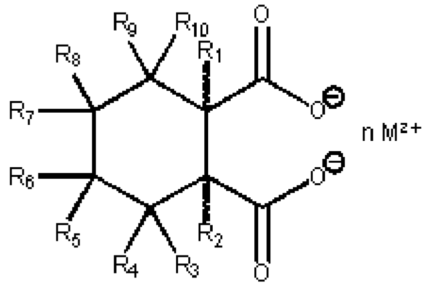

(I)

wobei

jedes $R_1$, $R_2$, $R_3$, $R_4$, $R_5$, $R_6$, $R_7$, $R_8$, $R_9$ und $R_{10}$ unabhängig ausgewählt ist aus Wasserstoff, $C_1$ bis $C_{10}$ Kohlenwasserstoffgruppen, Hydroxyl, $C_1$ bis $C_{10}$ Alkoxy, $C_1$ bis $C_{10}$ Alkylenoxy, Amin, $C_1$ bis $C_{10}$ Alkylamin, F, Cl, Br, I und Phenyl;
wobei zwei von $R_3$ bis $R_{10}$, die sich an benachbarten Kohlenstoffatomen befinden, zu einer cyclischen Struktur verschmolzen sein können;
M ist ausgewählt aus den Gruppen Calcium, Strontium, Lithium, Zink, Magnesium und einbasisches Aluminium;
n ist 1 oder 2;
z ist 1 oder 2;
die Summe von n+z ist 3; und
c) gegebenenfalls ein Fettsäuresalz

zur Bereitstellung eines Films, der eine Sauerstoffinduktionszeit innerhalb von 10 % der Sauerstoffinduktionszeit der identischen Polymerzusammensetzung ohne die Verbindung gemäß Formel (I) und das fakultative Fettsäuresalz aufweist.

**2.** Verwendung gemäß Anspruch 1, wobei das bi- oder multimodale Ethylenpolymer (P) unter Verwendung eines Single-Site-Katalysators hergestellt wurde.

**3.** Verwendung gemäß Anspruch 1 oder 2, wobei die Menge der Verbindungen der Formel (I) im Bereich von 50 bis 10000 ppm, bezogen auf die Gesamtmenge der Polymerzusammensetzung, liegt.

**4.** Verwendung gemäß einem der Ansprüche 1 bis 3, wobei in Formel (I) jeder der Reste $R_1$, $R_2$, $R_3$, $R_4$, $R_5$, $R_6$, $R_7$, $R_8$, $R_9$ und $R_{10}$ unabhängig voneinander aus Wasserstoff und einer $C_1$ bis $C_{10}$ Kohlenwasserstoffgruppe ausgewählt ist.

**5.** Verwendung gemäß einem der vorhergehenden Ansprüche, **dadurch gekennzeichnet, dass** das bi- oder multimodale Ethylenpolymer (P) einen $MFR_2$, bestimmt nach ISO 1133 bei 190°C und unter einer Last von 2,16 kg, von 0,25 bis 20 g/10 min aufweist.

**6.** Verwendung gemäß einem der vorhergehenden Ansprüche, wobei das bi- oder multimodale Ethylenpolymer (P) mindestens eine Ethylenpolymerkomponente (A) und eine Ethylenpolymerkomponente (B) umfasst, wobei der $MFR_2$ der Ethylenpolymerkomponente (A) von dem $MFR_2$ der Ethylenpolymerkomponente (B) verschieden ist, wobei der $MFR_2$ sowohl von (A) als auch von (B) gemäß ISO 1133 bei einer Temperatur von 190°C und unter einer Last von 2,16 kg bestimmt wird.

**7.** Verwendung gemäß Anspruch 6, wobei das Verhältnis von [der Menge (Mol-%) des in der Ethylenpolymerkomponente (A) vorhandenen Comonomers] zu [der Gesamtmenge (Mol-%) der Comonomere des endgültigen bi- oder multimodalen Ethylenpolymers (P)] 0,2 bis 0,6, vorzugsweise 0,24 bis 0,5 beträgt, wobei die Ethylenpolymerkomponente (A) vorzugsweise eine geringere Menge (Mol-%) an Comonomer aufweist als die Ethylenpolymerkomponente (B).

**8.** Verwendung gemäß Anspruch 6 oder 7, **dadurch gekennzeichnet, dass** die Ethylenpolymerkomponente (A) einen $MFR_2$, bestimmt nach ISO 1133 bei 190°C und unter einer Last von 2,16 kg, von 1 bis 50 g/10 min, vorzugsweise von 1 bis 40, besonders bevorzugt von 1 bis 30, g/10 min aufweist.

**9.** Verwendung gemäß einem der vorhergehenden Ansprüche, wobei die Polymerzusammensetzung, wenn sie zu einem einschichtigen Film mit einer Dicke von 40 µm geformt ist, weiterhin durch mindestens eines der folgenden Merkmale gekennzeichnet ist

i) ein Zugmodul in Maschinenrichtung, bestimmt nach ASTM D 882, von 180 bis 300 MPa;
ii) eine nach ISO 6383-2 bestimmte Reißfestigkeit in Maschinenrichtung von mindestens 4,5 N;
iii) eine nach ISO 7765-1: 2004 ermittelte Fallfestigkeit von mindestens 900 g;
iv) eine nach ASTM D1003 bestimmte Trübung von 15 % oder weniger;
v) einen Glanz bei 60°C, bestimmt nach ISO 2813, von mindestens 75 %;
vi) eine Sauerstoffdurchlässigkeitsrate, bestimmt nach ASTM D 3985 unter Verwendung einer Drucksensormethode (Standardbedingungen 23°C, 50% Luftfeuchtigkeit), von 4000 ml/($m^2$·Tag) oder weniger;
vii) eine Wasserdampfdurchlässigkeit, bestimmt nach ASTM F 1249, von 10,0 g/($m^2$·Tag) oder weniger;
viii) eine Versiegelungsbeginntemperatur (SIT) bei 5N, bestimmt nach ASTM F 2029 und ASTM F 88 mit einer Versiegelung von 25 mm, einem Versiegelungsdruck von 43,5 psi und einer Verweilzeit von 1 s, unter Verwendung von Folienproben mit einer Dicke von 40 µm, von 75°C oder mehr; und/oder
ix) eine Heißklebetemperatur bei 1N, bestimmt nach ASTM F 1921 (innen-innen) bei einem Siegeldruck von 0,25 N/$mm^2$, einer Verweil-/Siegelzeit von 1 s, einer Verzögerungszeit von 100 ms und einer Prüf-/Abziehgeschwindigkeit von 198,8 mm/s, unter Verwendung von Folienproben mit einer Dicke von 40 µm, von 65°C oder mehr.

**10.** Verwendung gemäß einem der vorhergehenden Ansprüche, wobei die Menge des bi- oder multimodalen Ethylenpolymers (P), bezogen auf die Folie, mindestens 80 Gew.-% beträgt.

## Revendications

**1.** Utilisation d'une composition de polymère comprenant

a) un polymère d'éthylène bi- ou multi-modal (P) ayant une distribution de poids moléculaire (MWD) inférieure à 5,0 et un facteur d'hétérogénéité (HF) déterminé par chromatographie par fraction croisée (CFC) dans la plage de 30 à 120 et une masse volumique dans la plage de 910 à 935 kg/$m^3$ ;
b) un composé de formule (I) suivante

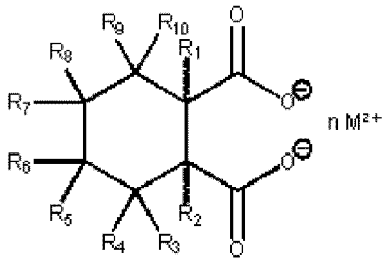

(I)

dans laquelle

chaque $R_1$, $R_2$, $R_3$, $R_4$, $R_5$, $R_6$, $R_7$, $R_8$, $R_9$ et $R_{10}$ est sélectionné indépendamment parmi un hydrogène, les groupes hydrocarbyle en $C_3$ à $C_{10}$, un hydroxyle, un alcoxy en $C_1$ à $C_{10}$, un alkylèneoxy en $C_3$ à $C_{10}$, une amine, une alkylamine en $C_3$ à $C_{10}$, F, Cl, Br, I et un phényle ;
moyennant quoi deux parmi $R_3$ à $R_{10}$ situés sur des atomes de carbone adjacents peuvent être condensés pour former une structure cyclique ;
M est sélectionné dans le groupe consistant en le calcium, le strontium, le lithium, le zinc, le magnésium et l'aluminium monobasique ;
n est 1 ou 2 ;
z est 1 ou 2 ;
la somme de n+z est 3 ; et

c) optionnellement un sel d'acide gras

pour fournir un film maintenant un temps d'induction de l'oxygène dans les 10 % du temps d'induction de l'oxygène de la composition de polymère identique sans le composé selon la formule (I) et le sel d'acide gras optionnel.

**2.** Utilisation selon la revendication 1, dans laquelle le polymère d'éthylène bi- ou multi-modal (P) a été produit en utilisant un catalyseur à site unique.

**3.** Utilisation selon les revendications 1 ou 2, dans laquelle la quantité de composés selon la formule (I) est dans la plage de 50 à 10 000 ppm sur la base de la quantité totale de la composition de polymère.

**4.** Utilisation selon l'une des revendications 1 à 3, dans laquelle dans la formule (I) chacun parmi $R_1$, $R_2$, $R_3$, $R_4$, $R_5$, $R_6$, $R_7$, $R_8$, $R_9$ et $R_{10}$ est sélectionné indépendamment parmi un hydrogène et un groupe hydrocarbyle en $C_1$ à $C_{10}$.

**5.** Utilisation selon l'une des revendications précédentes, dans laquelle le polymère d'éthylène bi- ou multi-modal (P) présente un $MFR_2$, déterminé selon l'ISO 1133 à 190 °C et sous une charge de 2,16 kg, de 0,25 à 20 g/10 min.

**6.** Utilisation selon l'une des revendications précédentes, dans laquelle le polymère d'éthylène bi- ou multi-modal (P) comprend au moins un composant polymère d'éthylène (A) et un composant polymère d'éthylène (B), dans laquelle le $MFR_2$ du composant polymère d'éthylène (A) est différent du $MFR_2$ du composant polymère d'éthylène (B), le $MFR_2$ de (A) et de (B) étant déterminé selon l'ISO 1133 à une température de 190 °C et sous une charge de 2,16 kg.

**7.** Utilisation selon la revendication 6, dans laquelle le rapport [la quantité (% en mole) de comonomère présent dans le composant polymère d'éthylène (A)] sur [la quantité totale (% en mole) de comonomères du polymère d'éthylène bi- ou multi-modal (P) final] est de 0,2 à 0,6, de préférence de 0,24 à 0,5, de manière davantage préférée le composant polymère d'éthylène (A) présente une quantité (% en mole) inférieure de comonomère par rapport au composant polymère d'éthylène (B) .

**8.** Utilisation selon les revendications 6 ou 7, dans laquelle le composant polymère d'éthylène (A) présente un $MFR_2$, déterminé selon l'ISO 1133 à 190 °C et sous une charge de 2,16 kg, de 1 à 50 g/10 min, de préférence de 1 à 40, de manière davantage préférée de 1 à 30 g/10 min.

**9.** Utilisation selon l'une des revendications précédentes, dans laquelle la composition de polymère, lorsqu'elle est formée en un film monocouche ayant une épaisseur de 40 um, est en outre **caractérisée par** au moins l'une des caractéristiques suivantes

i) un module de traction dans le sens machine, déterminé selon l'ASTM D 882 de 180 à 300 MPa ;
ii) une résistance à la déchirure dans le sens machine, déterminée selon l'ISO 6383-2, d'au moins 4,5 N ;
iii) une résistance aux chocs à la torpille déterminée selon l'ISO 7765-1: 2004 d'au moins 900 g ;
iv) un voile, déterminé selon l'ASTM D1003, de 15 % ou moins ;
v) un brillant à 60 °C, déterminé selon l'ISO 2813, d'au moins 75 % ;
vi) un taux de transmission d'oxygène, déterminé selon l'ASTM D 3985 en utilisant un procédé à capteur de pression (conditions standard 23 °C, 50 % d'humidité) de 4000 ml/($m^2$ jour) ou moins ;
vii) un taux de transmission de vapeur d'eau, déterminé selon l'ASTM F 1249, de 10,0 g/(m2 jour) ou moins ;
viii) une température d'initiation du scellement (SIT) à 5N, déterminée selon l'ASTM F 2029 et l'ASTM F 88 avec un joint de 25 mm, une pression de scellement de 43,5 psi et un temps de séjour de 1 s, en utilisant des échantillons de film de 40 um d'épaisseur, de 75 °C ou plus ; et/ou
ix) une température d'état collant à chaud à 1N, déterminée selon l'ASTM F 1921 (intérieur-intérieur) à une pression de scellement de 0,25 N/mm2, un temps de séjour/scellement de 1 s, un temps de retard de 100 ms et une vitesse de test/pelage de 198,8 mm/s, en utilisant des échantillons de film de 40 um d'épaisseur, de 65 °C ou plus.

**10.** Utilisation selon l'une des revendications précédentes, moyennant quoi la quantité de polymère d'éthylène bi- ou multi-modal (P) sur la base du film est d'au moins 80 % en poids.

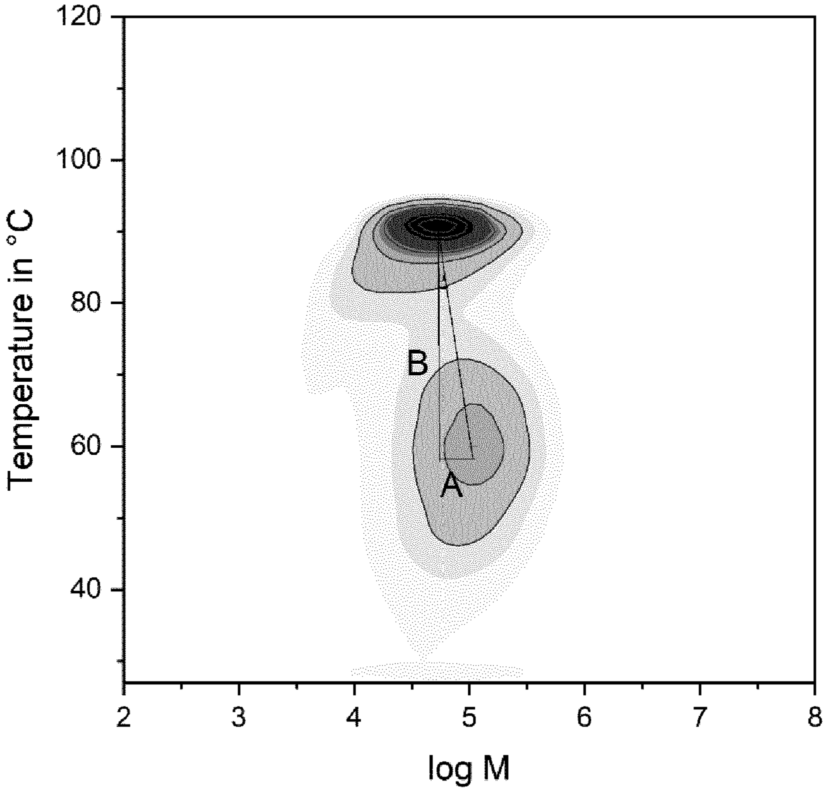


Figure 1: Schematic figure to calculate angle α and HF (A*B)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016135590 A
- US 2010159173 A
- WO 9618662 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 9212182 A
- US 4582816 A
- US 3405109 A
- US 3324093 A
- EP 479186 A
- US 5391654 A
- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A
- EP 299750 A


### Non-patent literature cited in the description


- **HAGSTRÖM.** *The Polymer Processing Society,* 19 August 1997
- **KLIMKE, K ; PARKINSON, M ; PIEL, C ; KAMINSKY, W ; SPIESS, H.W ; WILHELM, M.** *Macromol. Chem. Phys.,* 2006, vol. 207, 382
- **PARKINSON, M ; KLIMKE, K ; SPIESS, H.W ; WILHELM, M.** *Macromol. Chem. Phys.,* 2007, vol. 208, 2128
- **CASTIGNOLLES, P ; GRAF, R. ; PARKINSON, M ; WILHELM, M ; GABORIEAU, M.** *Polymer,* 2009, vol. 50, 2373
- **POLLARD, M ; KLIMKE, K. ; GRAF, R ; SPIESS, H.W ; WILHELM, M. ; SPERBER, O. ; PIEL, C ; KAMINSKY, W.** *Macromolecules,* 2004, vol. 37, 813
- **KLIMKE, K ; PARKINSON, M ; PIEL, C ; KAMINSKY, W. ; SPIESS, H.W. ; WILHELM, M.** *Macromol. Chem. Phys.,* 2006, vol. 207, 382
- **FILIP, X ; TRIPON, C. ; FILIP, C.** *J. Mag. Resn.,* 2005, vol. 176, 239
- **GRIFFIN, J.M ; TRIPON, C ; SAMOSON, A ; FILIP, C ; BROWN, S.P.** *Mag. Res. in Chem.,* 2007, vol. 45, S1-S198
- **J. RANDALL.** *Macromol. Sci., Rev. Macromol. Chem. Phys.,* 1989, vol. C29, 201
- Fractionation. **SOARES, J.B.P.** Encyclopedia Of Polymer Science and Technology. John Wiley & Sons, 2001, vol. 10, 75-131
- **HEINO, E.L. ; LEHTINEN, A. ; TANNER J ; SEPPÄLÄ, J.** Rheological characterization of polyethylene fractions. *Neste Oy, Porvoo, Finland, Theor. Appl. Rheol., Proc. Int. Congr. Rheol,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995
- Definition of terms relating to the non-ultimate mechanical properties of polymers. *Pure & Appl. Chem.,* 1998, vol. 70 (3), 701-754
- **ORTIN A. ; MONRABAL B. ; SANCHO-TELLO J.** *Macromol. Symp,* 2007, vol. 257, 13-28
- *CHEMICAL ABSTRACTS,* 151840-68-5